# EUROPÄISCHE PATENTSCHRIFT

(11) **EP 0 826 122 B1**
(45) Veröffentlichungstag und Bekanntmachung des Hinweises auf die Patenterteilung: **18.10.2000**
(21) Anmeldenummer: 95920837.2
(22) Anmeldetag: 19.05.1995
(51) Int. Cl.: F16L 9/128, F16L 47/02

(54) **ROHRLEITUNG AUS EXTRUDIERTEM KUNSTSTOFF-VERBUNDROHR MIT MUFFENVERBINDUNG**
PIPELINE MADE FROM EXTRUDED PLASTIC COMPOSITE PIPING WITH A SLEEVE CONNECTION
CONDUITE FORMEE D'UN TUBE COMPOSITE EN MATIERE PLASTIQUE EXTRUDEE AVEC MANCHON DE RACCORDEMENT

(43) Veröffentlichungstag der Anmeldung: 04.03.1998
(73) Patentinhaber: Becker Plastics Gmbh, 45711 Datteln (DE)
(72) Erfinder: HOFFMANN, Manfred, D-67098 Bad Dürkheim (DE)
(74) Vertreter: Herrmann-Trentepohl, Werner, Dipl.-Ing.
(86) Internationale Anmeldenummer: EP9501903
(87) Internationale Veröffentlichungsnummer: WO9636830

(56) Entgegenhaltungen:
- EP-A- 0 567 947
- BE-A- 544 728
- DE-B- 1 226 842
- DE-U- 9 304 568
- FR-A- 1 586 305
- GB-A- 747 732

## Beschreibung

Die Erfindung betrifft eine Rohrleitung aus extrudiertem Kunststoff-Verbundrohr gemäß dem Oberbegriff des Anspruches 1. Eine derartige Rohrleitung ist aus dem DE-U-93 04 568.9 bekannt.

Das erfindungsgemäße extrudierte Kunststoff-Verbundrohr besteht vorwiegend aus polyolefinischen Werkstoffen, beispielsweise Polypropylen. Das Basisrohr weist infolge der Verstärkungsschicht, welche die Festigkeit erheblich steigert, eine gegenüber der durch die Industrienorm (DIN) vorgeschriebenen Dicke verminderte Stärke auf. Die erfindungsgemäße Rohrleitung kann dabei aus Einzelrohren bestehen, welche mit Hilfe von Fittings zusammengeschlossen sind. Insbesondere handelt es sich hierbei um Heizelement-Schweißmuffen. Insbesondere in dieser Ausführung dient die erfindungsgemäße Rohrleitung bevorzugt zur Weiterleitung von Kalt- und Warmwasser in der Trinkwasser-Hausinstallation, aber auch für chemikalienführende Leitungen in der chemischen Industrie.

Die Verstärkungsschicht der erfindungsgemäßen Rohrleitung ist nicht durchgehend, sondern läßt Teile der Rohroberfläche frei. Sie ist in diesem Sinne perforiert. Auf den durch die Perforierung geschaffenen Mantelflächen verbindet sich der Kunststoff des Basisrohres mit dem Kunststoff der Außenschicht, welche die Verstärkungsschicht abdeckt. Diese Kunststoffverbindungen führen zu einer axialen Festlegung der Verstärkungsschicht. Sie ist Voraussetzung für die Angleichung der Ausdehnungskoeffizienten des Kunststoffanteiles und der Verstärkungeschicht. Diese Ausdehnungskoeffizienten können mehr oder weniger stark voneinander abweichen. Außer dem dadurch gewonnenen Zusammenhalt der verschiedenen und vorstehend beschriebenen Werkstoffe der erfindungsgemäßen Rohrleitung ergibt sich in den Kunststoffverbindungen von Basisrohr und Außenschicht auch eine Möglichkeit, Wasser nach außen diffundieren zu lassen, falls der Kunststoff im Betrieb der Rohrleitung Wasser aufnimmt.

Verwendet man zwischen der Verstärkungsschicht und dem Kunststoff von Basisrohr und Außenschicht einen Haftvermittler, so wird die Verbindung mit der Verstärkungsschicht zusätzlich auch an den Stellen herbeigeführt, die sich zwischen den Perforationen der Verstärkungsschicht befinden. Erfindungsgemäß ist deshalb die Verwendung von Haftvermittlern in der Regel günstig, aber nicht immer Voraussetzung.

Der für den betreffenden Einsatzfall zu wählende Durchmesser der erfindungsgemäßen Rohrleitung ist geringer als der in der DIN vorgeschriebene Durchmesser, da die Verstärkungsschicht die Festigkeit erhöht.

Es ist aus dem DE-U-93 04 568.9 bekannt, die Verstärkungsschicht aus einer Aluminiumfolie zu bilden. Sie weist in der Regel eine Dicke von 150 bis 200 µm auf und wird bei der Herstellung der Rohrleitung um das Basisrohr gelegt und an ihren Längskanten durch Warmversiegelung, aber auch nach anderen Schweißverfahren verbunden. In diesen Fällen ist die Verwendung von Haftvermittlern Voraussetzung für eine optimale Verbindung der Verstärkungsschicht mit dem Kunststoff der Rohrleitung.

Die durch die Aluminiumfolie gesteigerte Festigkeit der Rohrleitung beschränkt sich hierbei auf die Verbundwirkung mit der dünnen Aluminiumfolie. Der Durchmesser des Rohrmantels ist daher noch immer verhältnismäßig groß.

Da außerdem die Aluminiumfolie mit dem Kunststoff der Schweißmuffe nicht verschweißbar ist, macht die Verbindung der Rohrenden mit den Muffen einen besonderen Arbeitsgang erforderlich. Der besteht darin, vor dem Verschweißen die Außenschicht einschließlich der Aluminiumfolie abzuschälen, so daß der Kunststoff des Basisrohres freigelegt wird und mit der Schweißmuffe zusammenfließen kann. Hierdurch fehlt es in der Muffenverbindung weitgehend an einer Armierung der Rohrleitung.

Mit den vorstehend beschriebenen Merkmalen unterscheidet sich die Erfindung allerdings von ebenfalls vorbekannten faserverstärkten Rohren aus duromeren Kunststoffen, wie ungesättigtem Polyesterharz (UP) oder Epoxidharz (EP). Die Faserverstärkung besteht in der Regel aus Glasfasern in Form von Bündeln oder Strängen (sogenannten Rovings) oder Matten und ist in die Wand des Basisrohres eingebettet. Der Verbund der Fasern mit dem Kunststoff des Rohres wird mit Hilfe einer Schlichte der Glasfasern gewährleistet. Rohrleitungen dieser Art weisen Muffen oder Formstücke auf, welche aus dem gleichen faserverstärkten Material wie die Rohre gefertigt sind. Bei der Verbindung müssen die Enden der Rohre in die Muffen eingeklebt werden. Die Klebung erfolgt mit dem Basisharz und den notwendigen Härtern. Eine Verschweißung der Rohre ist aufgrund ihrer duromeren, nicht aufschmelzbaren Werkstoffe nicht möglich.

Von solchen zum Stande der Technik gehörigen, aus duromeren Kunststoffen bestehenden Rohrleitungen unterscheiden sich anderweitig bekannte Rohre aus Kunststoff, welche anstelle von Glasfasern solche aus Carbon, Aramid oder Kevlar verwenden, die nach dem sogenannten Pulwind-Prozeß longitudinal und über Kreuz bzw. verflochten in die Formmasse eingebettet werden. Diesen Rohren fehlt eine verschweißbare Außenschicht, so daß die Verbindungen ebenfalls nicht mit Schweißmuffen hergestellt werden können.

Allerdings sind auch Kunststoffrohre aus thermoplastischen Werkstoffen, wie Polyethylen (PE) und Polypropylen (PP) bekannt, welche zur Erhöhung ihrer Festigkeit, insbesondere bei Wärme- und Chemikalienbeanspruchung außen mit einer faserverstärkten Schicht aus Glasfaser-Rovings oder -Matten, eingebettet in Polyesterharz, armiert werden. Derartige Rohre sind schwierig herzustellen und entsprechend teuer. Sie werden daher nur in der chemischen Industrie eingesetzt.

Die Erfindung unterscheidet sich durch die eingangs bezeichneten Merkmale auch von anderweitig bekannten, faserverstärkten, flexiblen Schläuchen aus weichmacherhaltigem, thermoplastischem Kunststoff (z.B. Weich-PVC) oder Natur- bzw. Synthese-Kautschuk. Letztere werden in der einschlägigen Technik allgemein als Gummischläuche bezeichnet. Als Fasern verwendet man in der Verstärkung anorganische, mineralische oder metallische Werkstoffe, z.B. Glasfasern oder Metallfasern oder auf organischer Basis Hanf- oder Jutefasern. Carbon-, Kevlar- oder Aramidfasern werden wegen ihrer vergleichsweise hohen Beschaffungskosten nur in Sonderfällen eingesetzt. Da die Schäuche kein Basisrohr verwenden, bleiben sie im Gegensatz zu steifen Rohren in allen Richtungen flexibel und eignen sich daher nicht als heizwasserführende Rohre in der Trinkwasser-Hausinstallation, sondern werden in der Haustechnik nur als Duscheschläuche oder Zuleitungen für Öl- und Gasbrenner an Kesseln eingesetzt.

Die Erfindung unterscheidet sich ferner von faserverstärkten Rohren aus thermoplastischen Kunststoffen, bei denen Glasfasern kurzer Länge von ca. 0,3 bis 0,6 mm bereits bei der Granulatherstellung in der Kunststoff-Formmasse enthalten sind und diese dann nach dem konventionellen Extrusionsverfahren zu einem Rohr verarbeitet werden. Dann sind die Verstärkungsfasern im Rohr durch den Schmelzfluß im Extrusionswerkzeug in Extrusionsrichtung, d.h. in Längsrichtung des Rohres, ausgerichtet. Die Faserverstärkung ergibt dann zwar in Längsrichtung der Rohre eine Festigkeitserhöhung, quer dazu entsteht jedoch eine Festigkeitsverminderung. In temperaturbeanspruchten Leitungen, in denen es darauf ankommt, die Längendehnung der Rohre zu beherrschen, lassen sich deswegen derartige Rohre kaum verwenden.

Schließlich sind Rohrleitungen aus extrudiertem Kunststoff-Verbundrohr bekannt (GB-A-747 732), bei denen ein extrudiertes Basisrohr eine Verstärkungsschicht aus einem Glasfasergewebe aufweist, welches um das Basisrohr gewickelt ist. Auf diese Verstärkungsschicht ist eine Außenschicht extrudiert. Bei einer Ausführungsform ist die Glasfasergewebeumwicklung durch eine Spirale aus einem Metalldraht ersetzt, der mit Glasfasern umwickelt ist. wobei die Spirale in in das Basisrohr eingebrachte Nuten eingelegt ist. Da sich der Kunststoff der Außenschicht wegen seiner thermoplastischen Zusammensetzung mit den Glasfasern verbindet, ist auf diese Weise die Verstärkungsschicht in Längsrichtung der Rohre festgelegt und kann Kräfte übertragen.

Der Erfindung löst die Aufgabe, bei einer Rohrleitung aus Kunststoff-Verbundrohren, welche durch Verbindung ihrer Außenschicht durch die Perforationen ihrer Verstärkungsschicht mit dem Basisrohr eine gegenüber Kunststoffrohren gleichen Durchmessers höhere Festigkeit aufweisen, auf den besonderen Arbeitsgang des Abschälens der Verstärkungsschicht zum Zwecke des Einschweißens in die Fittings zu verzichten. Die Lösung dieser Aufgabe erfolgt gemäß dem Grundgedanken der Erfindung mit den Merkmalen des Anspruches 1. Weitere Merkmale der Erfindung sind Gegenstand der Unteransprüche.

Erfindungsgemäß wird die in den bekannten Rohrleitungen verwendete perforierte Metall- insbesondere Aluminiumfolie durch eine Faserumwicklung ersetzt, die so gestaltet ist, daß sie die Verbindung des Kunststoffes der Außenschicht mit dem Kunststoff des Basisrohres durch offene Maschen zwischen den Fasern der Faserumwicklung gewährleistet. Hierdurch wird einerseits eine erhöhte Festigkeit der Rohrleitung geschaffen, die durch die Vielzahl der zwischen den Fasern freiliegenden Teilflächen des Rohrmantels gegenüber dem Bekannten begründet ist, aber außerdem in der vergrößerten Festigkeit der für die Umwicklung verwendeten Fasern zu suchen sein kann. Ein solches Verbundrohr läßt sich wie bekannt aus einem thermoplastischen Kunststoff wie beispielsweise Polypropylen, Polyethylen oder Polybuten extrudieren und als Basisrohr verwenden. Das Basisrohr kann unmittelbar nach Verlassen der Vakuumtankkalibrierung und eines nachfolgenden Kühlbades auf seiner äußeren Oberfläche mittels IR-Strahlung oder Warmluft bis über seine Erweichungstemperatur aufgeheizt und durch eine Verseilmaschine geführt werden, mit der die Faserumwicklung in Form von Fasersträngen, vorzugsweise aus Glasfaser, sogenannten Rovings, welche vorzugsweise mit einer Schlichte versehen sind, überkreuzend verflochten oder nur diagonal übereinander gewickelt und in die erweichte Rohroberfläche eingebettet werden. Anschließend durchläuft das umflochtene Rohr den Ummantelungskopf (Pinolen-Querkopf) eines weiteren Extruders und wird mit einer relativ dicken Beschichtung aus dem gleichen thermoplastischen Kunststoff versehen, die die Umwicklung abdeckt und durch die offenen Maschen der kreuzweisen Umflechtung bzw. Umwicklung mit dem Material des inneren Rohres eine innige Verbindung durch Verschweißen in der Schmelze eingeht.

Dadurch hat die erfindungsgemäße Rohrleitung gegenüber zum Stand der Technik gehörigen Kunststoffrohren aus dem gleichen Basiswerkstoff bei gleicher Wanddicke eine wesentlich höhere Festigkeit im Zeitstand-Innendruck- oder Berstdruckversuch. Dies findet seine Erklärung darin, daß die Umwicklung durch ihre diagonal oder rautenförmig überkreuzte Anordnung in Richtung der Resultierenden aus der Längs- und Querbeanspruchung der Rohre unter Druckbelastung eine erhöhte Spannung im Vergleich zum reinen Kunststoffmaterial aufnehmen kann. Deshalb läßt sich die Wanddicke der erfindungsgemäßen Rohre im gegebenen Einsatzfall gegenüber der DIN beträchtlich reduzieren. Bezogen auf die in den DIN-Normen festgelegten Druckklassen der vrschiedenen Kunststoffrohre mit ihren zugeordneten Wanddicken können somit bei gleicher möglicher Druckbeanspruchung über die Zeit in Abhängigkeit von der Temperatur beispielsweise um zwei Druckklassen niedriger eingestufte Rohre mit geringer Wanddicke und Faserverstärkung verwendet werden. Damit verbunden ist nicht nur eine Materialersparnis, sondern auch bei gleichem Außendurchmesser durch die reduzierte Wanddicke ein vergrößerter Innendurchmesser, d.h. ein vergrößertes Durchflußvolumen. Wird auf diese Weise eine Trinkwasser-Installation nach dem Durchflußvolumen berechnet und dimensioniert, so können im Umkehrschluß faserverstärkte Rohre geringeren Außendurchmessers eingesetzt werden, die einen geringeren Platzbedarf für Rohrschächte und andere bauliche Maßnahmen, wie Ausgleichsdämmungen bei Stockwerksinstallationen auf der Rohrdecke haben und bei vorschriftsmäßiger Wärmedämmung nach der verschärften Wärmeschutzverordnung geringere Dämmstoffdicken benötigen. Insgesamt ergibt sich dann eine Einsparung von Baukosten.

Die erfindungsgemäße Rohrleitung hat im Vergleich zu den als bekannt vorausgesetzten Rohren aus thermoplastischen Kunststoffen eine geringere thermische Längenänderung. Sie ist je nach Art des Werkstoffes und der verwendeten Fasern sowie deren Menge und geometrischer Anordnung geringer. Gegenüber unverstärkten Kunststoffrohren aus dem gleichen Basiswerkstoff ergibt sich eine um den Faktor 5 bis 10 geringere thermische Längenänderung. In allen Fällen ergibt sich daraus der Vorteil, daß bei der Montage die sonst notwendigen Längenkompensationshilfen in Form von Dehnungsbögen bzw. -schleifen entfallen oder in ihrer Zahl vermindert werden können. Die höhere Steifigkeit der erfindungsgemäßen Rohre äußert sich auch darin, daß die Rohre unter warmen Betriebsbedingungen, d.h. in der Warmwasserleitung nicht durchhängen und deshalb weniger Stützen in Form von Rohrschellen benötigen.

Die Verbindung der erfindungsgemäßen Rohre untereinander ist durch Schweißen, insbesondere mit Hilfe der handelsüblichen, genormten Schweißmuffen oder Formstücke wie T-Fittings, Bögen, Winkel und Reduzierstücken aus dem gleichen Basiswerkstoff deshalb möglich, weil die Außenschicht auf der Faserumwicklung vorhanden ist und die Umwicklung allgemein gesehen, vorzugsweise im äußeren Drittel der Rohrwanddicke angeordnet ist. In der Praxis ergibt sich dadurch ein Abstand von der Außenfläche der Außenschicht, der etwa 1 bis 3 mm betragen kann. Deshalb verbleibt eine Außenschicht ausreichender Stärke ihres verschweißbaren Kunststoffes, die eine fachgerechte Heizelement-Muffenschweißung ermöglicht. Dabei kann auf den besonderen Arbeitsgang des Abschälens der Faserarmierung zum Zwecke des Schweißens verzichtet werden.

Vorzugsweise und mit den Merkmalen des Anspruches 2 verschweißt man nicht nur den Rohrmantel mit der Muffe, sondern außerdem auch die Stirnseiten der Rohrenden mit Hilfe eines stirnseitigen Schweißwulstes, der durch das Einstoßen der stumpfen Rohrenden in die Schweißmuffe entsteht. Dies kann selbsttätig mit den Merkmalen des Anspruches 3 erfolgen. Hierbei wird der zur Verschweißung erforderliche Schweißwulst aus dem Muffenwerkstoff gewonnen, der sich aus dem Übermaß des Außendurchmessers des Rohres und des Untermaßes der Muffenöffnung, die das Rohrende aufnimmt.

Die Verschweißung der Rohrenden in den Muffen wird vorzugsweise mit den Merkmalen des Anspruches 11 optimiert. Dabei ist die Außenschicht in ihrer radialen Abmessung derart auf die Schweißmuffe abgestimmt, daß das Material der Außenschicht in das Muffenmaterial gepreßt wird und die nicht mit der Muffe schweißbare Umwicklung unterhalb der Schweißung erhalten bleibt. Es ergibt sich dadurch eine erhebliche Erhöhung der Festigkeit auch in den Muffen.

Wenn man gemäß den Merkmalen des Anspruches 4 die Umwicklung aus sich kreuzenden Fasersträngen bildet, ergeben sich zwischen den Fasersträngen freie Mantelflächen, die die offenen Maschen bilden, die die Verbindungen der Außenschicht mit dem Basisrohr enthalten. Wenn sich diese Flächen im Interesse einer verbreiterten Faserumwicklung vermindern, können zusätzliche offene Maschen zwischen den Fasern der Faserstränge gemäß den Merkmalen des Anspruches 5 geschaffen werden. Sind in den Fasersträngen die Fasern voneinander getrennt, so lassen sich die Faserstränge auch übereinander wickeln, ohne daß Maschen zwischen den Wicklungen verlorengehen. Diese Ausführungsform ist Gegenstand des Anspruches 7.

Ferner kann es im Interesse einer vereinfachten Fertigung der erfindungsgemäßen Rohre zweckmäßig sein, den Haftvermittler nicht gesondert aufzubringen, sondern nach den Merkmalen des Anspruches 8 in den Werkstoff der Außenschicht einzumischen, bevor diese aufgebracht wird.

Die Einzelheiten, weiteren Merkmale und andere Vorteile der Erfindung ergeben sich aus der nachfolgenden Beschreibung von Ausführungsformen der Erfindung anhand der Figuren in der Zeichnung; es zeigen
- Fig. 1: schematisch eine Anlage zur Fertigung der erfindungsgemäßen Rohrleitung,
- Fig. 2: eine abgeänderte Ausführungsform,
- Fig. 3: einen Querschnitt durch ein Rohr der erfindungsgemäßen Rohrleitung und
- Fig. 4: eine Darstellung der Muffenverbindung zweier in der Rohrleitung aneinander anschließender Rohre.

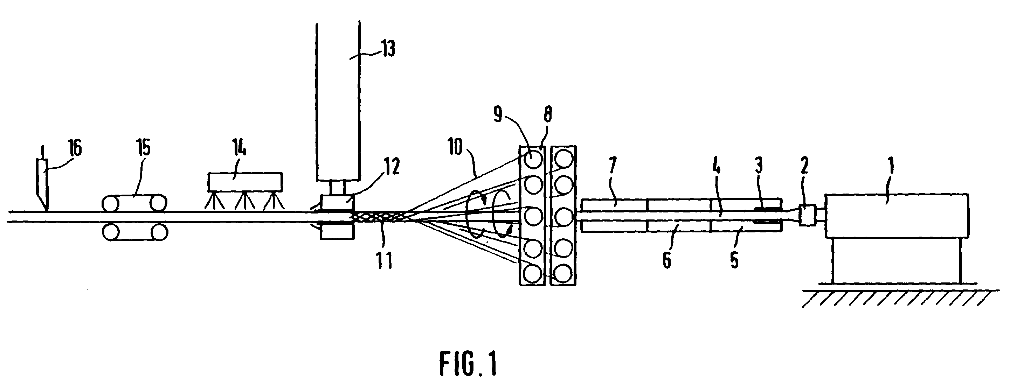

Die Anlage gemäß Fig. 1 dient der sogenannten online-Fertigung von extrudierten Kunststoff-Verbundrohren, bei der die gesamte Fertigung in einer zusammenhängenden Anlage erfolgt. Hierbei fertigt ein Extruder 1 mit einem Rohrkopf 2 und einer Vakuumkalibrierung 3 zunächst ein Basisrohr aus polyolefinischen Werkstoffen, welches im Innendurchmesser dem späteren fertigen Rohr entspricht. Die Wanddicke beträgt jedoch nur zwischen 75 und 90 % der geforderten Wanddicke nach der DIN-Norm.

Das extrudierte Rohr durchläuft die Kühlbäder 5, 6 und wird dabei bis auf seine Formstabilität abgekühlt. Daran schließt sich eine Infrarot-Aufwärmvorrichtung 7 an, die das Kunststoffrohr auf seiner äußeren Oberfläche bis kurz unter die Vicat-Erweichungstemperatur aufwärmt, ohne dessen Gesamtstabilität zu beeinträchtigen. Die Vorrichtung 7 kann durch einen Heißluftkanal ersetzt werden, den das Rohr durchläuft.

Im Anschluß an die Aufwärmung passiert das Rohr eine Verseilmaschine 8, die mit zwei gegeneinander umlaufenden Radkränzen ausgeführt ist. Auf den Radkränzen befinden sich Spulen 9 mit aufgewickelten Glasfasersträngen 10 (Rovings). Die Glasfaserstränge sind mit einer Schlichte versehen. Diese dient der gleichmäßigen Benetzung der Faseroberfläche und ermöglicht eine Verbundhaftung mit dem polyolefinischen Werkstoff des Rohres.

Sofern eine sehr hohe Festigkeit der Fassern im polymeren Basismaterial verlangt wird, läßt sich zusätzlich ein Haftvermittler, beispielsweise ein Maleinsäureanhydrid-gepfropftes Polypropylen-Random-Copolymer verwenden, das man in geringer Menge (ca. 2 Gew.-%) dem polymeren Werkstoff, z.B. Propylen-Random-Copolymer der äußeren Schicht des Basisrohres beimischt. Dann kann mittels zwei Estrudern und einem Zweischichten-Rohrkopf ein Zweischichtrohr als Basisrohr hergestelt werden, das den Haftvermittler aufweist.

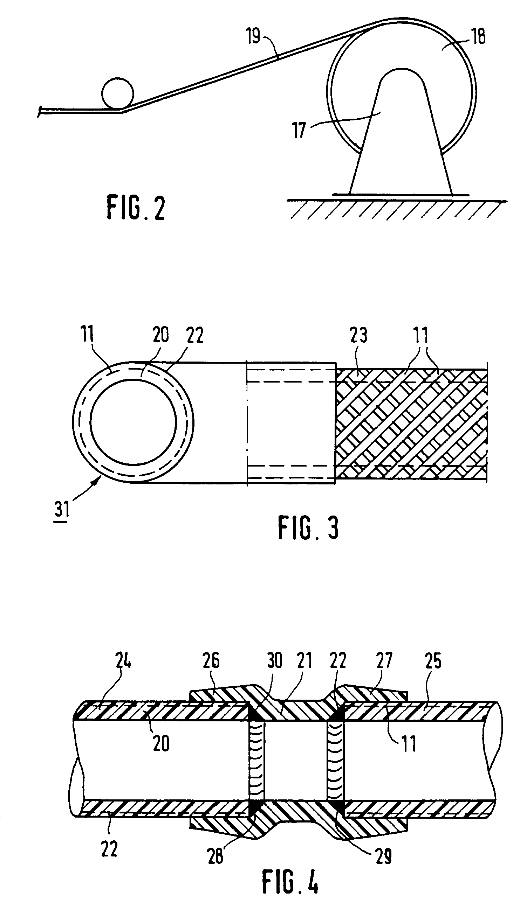

Das gegenläufige Verdrehen der Randkränze mit gleichzeitigem Verflechten der Rovings diagonal über die Oberfläche des Basisrohres 20 (Fig. 3) führt zu einer Faserumwicklung 11 aus den sich überkreuzenden Fasern 10. Zwischen den Fasern 10 der Faserumwicklung 11 befinden sich freie Flächen, die von den offenen Maschen 23 zwischen den Fasern 10 der Faserumwicklung 11 begrenzt sind. In der weiteren Folge wird das auf diese Weise umflochtene Basisrohr 20 durch den Pinolen-Querkopf 12 eines weiteren Extruders 13 geführt und eine zweite, äußere Schicht 22 des polyolefinischen Werkstoffes aufgebracht. Der Kunststoff dieser Schicht findet seinen Weg durch die Maschen 23 und verbindet sich mit dem Kunststoff des Basisrohres 20. Die Dicke der Außenschicht 22 wird so gewählt, daß in Addition mit der Wanddicke des Basisrohres die Gesamtwanddicke entsprechend einer Norm-Rohrreihe erreicht wird. Der Kunststoff der Außenschicht 22 umhüllt die Faserumwicklung 11, so daß im Ergebnis ein fester Verbund des Rohres entsteht (Composite) aus polymerem, thermoplastischem Basiswerkstoff und der Außenschicht 22.

Danach wird in der Fertigungslinie das Verbundrohr in einem Sprühkühlbad 14 abgekühlt und über eine Abzugsvorrichtung 15 der Säge 16 zugeführt, wo es in Stangen von handelsüblicher Länge zugeschnitten wird.

Die in Fig. 2 ebenfalls schematisch dargestellte Fertigungslinie unterscheidet sich von der Anlage nach Fig. 1 durch ihre off-line-Fertigung. An die Stelle des Extruders 1 mit Vakuumtankkalibrierung 3 und Kühlbädern 5, 6 tritt eine Abwicklungsvorrichtung 17, in die eine Großtrommel 18 mit bereits fertigem, polyolefinischem Basisrohr 19 eingelegt ist. Dieses Basisrohr wird zuvor mit einem geringeren Außendurchmesser produziert und durchläuft im folgenden eine Anlage, wie sie bereits in Fig. 1 ab der Infrarot-Aufwärmestrecke 7 dargestellt und vorstehend beschrieben ist.

Das fertige Rohr nach Fig. 3 besteht aus einem polyolefinischen Werkstoff, beispielsweise Polypropylen-Random-Copolymerisat (PP-R). Zur Verdeutlichung der Faserumwicklung 11 ist die äußere Schicht teilweise weggelassen. Dabei ist davon auszugehen, daß die Fasern in die äußere Randzone der Wand des Basisrohres 20 eingelagert und diagonal verflochten bzw. übereinander gewickelt sind, wodurch genügend große Maschen 23 entstehen, welche die Verbindung des Kunststoffes der Außenschicht 22 mit dem Kunststoff des Basisrohres 20 gewährleisten.

In Fig. 4 ist erfindungsgemaß die Verbindung zweier Verbundrohre nach Fig. 3 mit einer Schweißmuffe 21 dargestellt, deren einander zugekehrte Rohrenden mit 24 und 25 bezeichnet sind. Die Rohrenden werden außen und die Schweißmuffe wird innen mit einer Schweißvorrichtung für das Heizelement-Muffenschweißen auf eine Schweißtemperatur von z.B. 260°C aufgeheizt und dann in Längsrichtung, ohne die stumpfen Rohrenden zu verdrehen, in die Muffenenden 26, 27 eingestoßen. Jedes der in die Schweißmuffe 21 eingestoßenen Rohrenden 24, 25 schiebt einen Schmelzewulst vor sich her, der sich in einen Hohlraum 30 schiebt. Dieser wird aus der Stirnfläche 28 des betreffenden Rohrendes 24, 25 und dem anfangs konischen Ende 26 bzw. 27 der Schweißmuffe 21 gebildet. Er wird mit dem Wulst 30 im wesentlichen ausgefüllt, so daß die gesamte Faserverstärkung in die Muffe 21 eingebettet ist. Außerdem wird verhindert, daß Schmelze in den freien Durchflußquerschnitt der Schweißmuffe und der Rohrenden eindringt und diese verengt. Die Rohre und die Schweißmuffe gehen an ihrer Berührungsfläche in der Schmelze eine unlösbare, innige Verbindung miteinander durch die ineinanderfließenden Werkstoffe des Basisrohres 20 und der Außenschicht 22 ein. Die Faserverstärkung ist damit auch an der Stirnseite durch den Schmelzewulst 30 gegen das im Betrieb der Rohrleitung durchfließende Medium geschützt. Dabei sind nach dem Verschweißen die Muffenenden 26 und 27 mit dem außen zylindrischen Querschnitt 31 (Fig. 3) der Rohrenden 24 und 25 polyfusioniert.

Die vorstehend beschriebene Ausbildung und Herstellung der Muffenverbindung kann die Stärke der Außenschicht 22 in ihrer radialen Abmessung beeinflussen oder bestimmen. Dann ist die radiale Abmessung der Außenschicht 22 so auf die Schweißmuffe 21 abgestimmt, daß sie in der Schweißhitze als Schweißmaterial mit dem Muffenmaterial polyfusioniert wird, aber die nicht mit der Muffe 21 schweißbare Umwicklung 11 unterhalb der Schweißung erhalten bleibt.

Nicht dargestellt ist eine Ausführungsform der Erfindung, bei der der Haftvermittler zwischen der Umwicklung 11 des Basisrohres 20 und der Aupenschicht 22 in den Werkstoff der Außenschicht und eine mit diesem Werkstoff hergestellte Ummantelung des Basisrohres 20 gemischt ist. Hierbei kann der Gewichtsanteil des Haftvermittlers im Werkstoff der Außenschicht 22 und der Ummantelung des Basisrohres 20 zwischen 1 bis 5 Gew.-% betragen, wobei als Haftvermittler aufgepfropfte haftende Maleinsäureanhydrid-Gruppen dienen.

## Patentansprüche

1. Rohrleitung aus extrudiertem Kunststoff-Verbundrohr, deren Rohre durch Verschweißen mit Fittings bzw. Muffen aus Kunststoff (21) verbunden sind und ein Basisrohr (20) aufweisen, das eine aufgebrachte und befestigte, perforierte Verstärkungsschicht (11) und eine Außenschicht (22) aufweisen, die insbesondere aus dem gleichen Kunststoff wie das Basisrohr besteht und durch die Perforationen mit dem Kunststoff des Basisrohres (20) verbunden ist, wobei vorzugsweise Haftvermittler zur Befestigung der Verstärkungsschicht (11) und zwischen der Verstärkungsschicht (11) und der Anßenschicht vorgesehen sind, dadurch gekennzeichnet, daß die Verstärkungsschicht aus einer Faserumwicklung und die Perforationen aus den offenen Maschen zwischen den Fasern der Faserumwicklung bestehen und daß die Faserumwicklung derart nach außen verlegt ist, daß die Außenschicht eine für die Verschweißung mit den Fittings ausreichende Stärke aufweist und in die Fittings eingebettet ist.

2. Rohrleitung nach Anspruch 1, dadurch gekennzeichnet, daß die Rohrenden (24, 25) stumpf in die Enden (26, 27) von Schweißmuffen (21) gestoßen und in diesen unter Bildung eines stirnseitigen Schweißwulstes (30) an dem Rohrende (26, 27) befestigt sind.

3. Rohrleitung nach einem der Ansprüche 1 oder 2, dadurch gekennzeichnet, daß die Schweißwulste (30) der Rohrenden in den Schweißmuffen (21) auf ihrem Außenzylinder mit dem Innenzylinder der Muffenöffnung verschweißt sind und aus dem Übermaß des Außendurchmessers (31) der Rohrenden (24, 25) gegenüber dem Durchmesser der Muffenöffnung und des Untermaßes der Muffenöffnungen, die die Rohrenden aufnehmen, gegenüber dem Außendurchmesser der Rohrenden (24, 25) stammen.

4. Rohrleitung nach einem oder mehreren der Ansprüche 1 bis 3, dadurch gekennzeichnet, daß die offenen Maschen (23) zwischen sich kreuzenden Fasersträngen (10) gebildet sind.

5. Rohrleitung nach einem oder mehreren der Ansprüche 1 bis 3, dadurch gekennzeichnet, daß die offenen Maschen (23) zwischen den Fasern der Faserstränge (10) ausgebildet sind.

6. Rohrleitung nach einem der Ansprüche 1 bis 5, dadurch gekennzeichnet, daß die Faserstränge (10) übereinander gewickelt sind.

7. Rohrleitung nach einem oder mehreren der Ansprüche 1 bis 6, dadurch gekennzeichnet, daß der Haftvermittler zwischen der Umwicklung (11) des Basisrohres (20) und der Außenschicht (22) in den WerkStoff der Außenschicht und/oder in die Ummantelung des Basisrohres (20) gemischt ist.

8. Rohrleitung nach Anspruch 7, dadurch gekennzeichnet, daß der Gewichtsanteil des Haftvermittlers im Werkstoff der Außenschicht (22) und der Ummantelung des Basisrohres (20) 1 bis 5 Gew.-% beträgt und als Haftvermittler aufgepfropfte haftende Maleinsäureanhydrid-Gruppen dienen.

9. Rohrleitung nach einem oder mehreren der Ansprüche 1 bis 8, dadurch gekennzeichnet, daß die Fasern (10) der Umwicklung (11) aus anorganisch-mineralischen oder organischen Werkstoffen oder Metallwerkstoffen bestehen.

10. Rohrleitung nach einem oder mehreren der Ansprüche 1 bis 9, dadurch gekennzeichnet, daß die Fasern der Umwicklung zur vollständigen Benetzung mit dem Werkstoff des Rohres (31) mit einer Schlichte versehen sind.

11. Rohrleitung nach einem oder mehreren der Ansprüche 1 bis 10, dadurch gekennzeichnet, daß die Außenschicht (22) in ihrer radialen Abmessung so auf die Schweißmuffe (21) abgestimmt ist, daß sie in der Schweißhitze als Schweißmaterial mit dem Muffenmaterial polyfusioniert und die nicht mit der Muffe schweißbare Umwicklung unterhalb der Schweißung erhalten bleibt.

12. Rohrleitung nach einem oder mehreren der Ansprüche 1 bis 11, dadurch gekennzeichnet, daß der stirnseitige Schweißwulst (30) aus dem beim Einschieben der Rohrenden (24, 25) in die Schweißmuffe (21) verdrängten Werkstoff besteht und die Rohrstirnseite (28) im wesentlichen abdeckt.

13. Rohrleitung nach einem oder mehreren der Ansprüche 1 bis 12, dadurch gekennzeichnet, daß die Umwicklung (11) im äußeren Drittel der Gesamtdicke des Rohres angeordnet ist.

## Claims

1. Pipeline comprising extruded plastic composite piping, the pipes of which are connected by welding with fittings or sleeves of plastic (21) and have a base pipe (20), which has an applied and secured perforated reinforcing layer (11) and an outer layer (22), which, in particular, consists of the same plastic as the base pipe and is connected through the perforations with the plastic of the base pipe (20), whereby preferably adhesive agents are provided, for fastening the reinforcing layer (11) and between the reinforcing layer (11) and the outer layer, characterised in that the reinforcing layer comprises a fibre winding and the perforations comprise the open apertures between the fibres of the fibre winding and that the fibre winding is so installed to the exterior that the outer layer has a thickness sufficient for the welding with the fittings and is embedded in the fittings.

2. Pipeline as claimed in claim 1, characterised in that the pipe ends (24,25) are pushed flush into the ends (26,27) of welding sleeves (21) and are fastened in the latter whilst forming an end welding bead (30) on the pipe end (26,27).

3. Pipeline as claimed in one of claims 1 or 2, characterised in that the welding beads (30) on the pipe ends in the welding sleeves (21) are welded on their outer cylinder to the inner cylinder of the sleeve opening and originate from the oversize of the outer diameter (31) of the pipe ends (24,25) with respect to the diameter of the sleeve opening and the undersize of the sleeve openings, which receive the pipe ends, with respect to the outer diameter of the pipe ends (24,25).

4. Pipeline as claimed in one or more of claims 1 to 3, characterised in that the open holes (23) are defined between intersecting fibre strands (10).

5. Pipeline as claimed in one or more of claims 1 to 3, characterised in that the open holes (23) are defined between the fibres of the fibre strands (10).

6. Pipeline as claimed in one of claims 1 to 5, characterised in that the fibre stands (10) are wound one above the other.

7. Pipeline as claimed in one or more of claims 1 to 6, characterised in that the adhesive agent between the winding (11) on the base pipe (20) and the outer layer (22) is mixed into the material of the outer layer and/or into the wall of the base pipe (20).

8. Pipeline as claimed in claim 7, characterised in that the proportion by weight of the adhesive agent in the material of the outer layer (22) and the wall of the base pipe (20) is 1 to 5% by wt. and grafted adhering maleic acid and hydride groups serve as the adhesive agent.

9. Pipeline as claimed in one or more of claims 1 to 8, characterised in that the fibres (10) of the winding (11) comprise inorganic mineral or organic materials or metallic materials.

10. Pipeline as claimed in one or more of claims 1 to 9, characterised in that the fibres of the winding are provided with a wash for complete wetting with the material of the pipe (31).

11. Pipeline as claimed in one or more of claims 1 to 10, characterised in that the radial dimension of the outer layer (22) is so matched to the welding sleeve (21) that it polyfuses as a welding material with the sleeve material in the welding heat and the winding which is not weldable to the sleeve remains beneath the weld.

12. Pipeline as claimed in one or more of claims 1 to 11, characterised in that the welding bead (30) at the end comprises material displaced whilst sliding the pipe ends (24,25) into the welding sleeve (21) and substantially covers the end face (28) of the pipe.

13. Pipeline as claimed in one or more of claims 1 to 12, characterised in that the winding (11) is arranged in the outer third of the overall thickness of the pipe.

## Revendications

1. Canalisation constituée d'un tuyau d'assemblage en matière plastique extrudé, dont les tuyaux sont assemblés par soudage avec des raccords ou manchons en matière plastique (21) et présentent un tuyau de base (20) qui comporte une couche de renfort (11) perforée, appliquée et fixée, et une couche extérieure (22), réalisée sensiblement dans la même matière plastique que le tuyau de base et qui est reliée par les perforations à la matière plastique du tuyau de base (20), moyennant quoi des agents adhésifs sont de préférence prévus, entre la couche de renfort (11) et la couche extérieure, pour fixer la couche de renfort (11), caractérisée en ce que la couche de renfort est constituée d'une enveloppe fibreuse et les perforations sont constituées par les mailles ouvertes entre les fibres de l'enveloppe fibreuse et en ce que l'enveloppe fibreuse est déplacée vers l'extérieur de telle sorte que la couche extérieure présente une force suffisante pour le soudage avec les raccords et soit insérée dans les raccords.

2. Canalisation selon la revendication 1, caractérisée en ce que les extrémités de tuyau (24, 25) sont poussées bord à bord dans les extrémités (26, 27) de manchons de soudure (21) et sont fixées dans celles-ci en formant un cordon de soudure (30) frontal au niveau de l'extrémité du tuyau (26, 27).

3. Canalisation selon l'une des revendications 1 ou 2, caractérisée en ce que les cordons de soudure (30) des extrémités de tuyau dans les manchons de soudure (21) sont soudés sur leur cylindre extérieur avec le cylindre intérieur de l'orifice du manchon et sont issus de la dimension supérieure du diamètre extérieur (31) des extrémités de tuyau (24, 25) par rapport au diamètre de l'orifice du manchon et de la dimension inférieure des orifices de manchon qui reçoivent les extrémités de tuyau par rapport au diamètre extérieur des extrémités de tuyau (24, 25).

4. Canalisation selon l'une ou plusieurs des revendications 1 à 3, caractérisée en ce que les mailles ouvertes (23) sont formées entre les faisceaux de fibres (10) qui se coupent.

5. Canalisation selon une ou plusieurs des revendications 1 à 3, caractérisée en ce que les mailles ouvertes (23) sont constituées entre les fibres des faisceaux de fibres (10).

6. Canalisation selon une des revendications 1 à 5, caractérisée en ce que les faisceaux de fibres (10) sont enroulés les uns au-dessus des autres.

7. Canalisation selon une ou plusieurs des revendications 1 à 6, caractérisée en ce que l'agent adhésifs entre l'enveloppe (11) du tuyau de base (20) et la couche extérieure (22) est mélangé à la matière de la couche extérieure et/ou à la gaine du tuyau de base (20).

8. Canalisation selon la revendication 7, caractérisée en ce que la proportion en poids de l'agent adhésif dans la matière de la couche extérieure (22) et de la gaine du tuyau de base (20) est de 1 à 5% et comme agents adhésifs, on utilise des groupes anhydres d'acide maléique adhérent greffés.

9. Canalisation selon une ou plusieurs de revendications 1 à 8, caractérisée en ce que les fibres (10) de l'enveloppe (11) sont réalisées dans des matières inorganiques-minérales ou organiques ou dans des matières métalliques.

10. Canalisation selon une ou plusieurs des revendications 1 à 9, caractérisée en ce que les fibres de l'enveloppe sont dotées d'un enduit pour réaliser une imprégnation complète avec la matière du tuyau (31).

11. Canalisation selon une ou plusieurs des revendications 1 à 10, caractérisée en ce que la couche extérieure (22) présente une dimension radiale qui est adaptée au manchon de soudure (21) de telle sorte que sous la chaleur de soudage, elle est polyfusionnée en tant que matière de soudure avec la matière du manchon et que l'enveloppe ne pouvant être soudée avec le manchon soit maintenue au-dessous de la soudure.

12. Canalisation selon une ou plusieurs des revendications 1 à 11, caractérisée en ce que le manchon de soudure (30) frontal est constitué de la matière déplacée lors de la poussée des extrémités de tuyau (24, 25) dans le manchon de soudure (21) et recouvre sensiblement le bout du tuyau (28).

13. Canalisation selon une ou plusieurs des revendications 1 à 12, caractérisée en ce que l'enveloppe (11) est disposée dans le tiers extérieur de l'épaisseur totale du tuyau.
